Europäisches Patentamt

European Patent Office

Office européen des brevets

(11) Numéro de publication: **0 163 349 B1**

# FASCICULE DE BREVET EUROPEEN

(45) Date de publication de fascicule du brevet:
**28.08.91**

(51) Int. Cl.⁵: **H01H 47/00,** H01H 47/10

(21) Numéro de dépôt: **85200811.9**

(22) Date de dépôt: **21.05.85**

(54) **Circuit d'alimentation perfectionné pour un contacteur électromagnétique.**

(30) Priorité: **31.05.84 IT 6755484**

(43) Date de publication de la demande:
**04.12.85 Bulletin 85/49**

(45) Mention de la délivrance du brevet:
**28.08.91 Bulletin 91/35**

(84) Etats contractants désignés:
**CH DE FR GB LI**

(56) Documents cités:
**EP-A- 0 006 843**     **EP-A- 0 019 890**
**DE-A- 2 423 258**     **DE-A- 3 027 183**
**GB-A- 344 001**        **GB-A- 877 036**

(73) Titulaire: **GHISALBA S.p.A.**
**Via Tevere 15**
**I-10090 Cascine Vica Rivoli (Torino)(IT)**

(72) Inventeur: **Caltabiano, Alfio, Dr.**
**Viale Piemonte 9/5**
**I-10048 Vinovo (Torino)(IT)**

(74) Mandataire: **Patrito, Pier Franco, Dr. Ing.**
**Cabinet PATRITO BREVETTI Via Don Minzoni**
**14**
**I-10121 Torino(IT)**

EP 0 163 349 B1

## Description

La présente invention a trait à un circuit d'alimentation pour un contacteur électromagnétique, comprenant un composant d'économie inséré, dans la condition fermée du contacteur, par un contact auxiliaire du contacteur, un circuit de recirculation incluant un premier système semi-conducteur inséré de façon permanente en parallèle à l'enroulement d'excitation du contacteur, sans intervention d'éléments fortement dissipatifs et (considéré dans le cadre du circuit de recirculation) dans un sens conforme au sens de passage du courant d'alimentation dans l'enroulement, et au moins un second semi-conducteur dont le seuil de tension de conduction est une fraction de la tension d'alimentation de l'enroulement du contacteur.

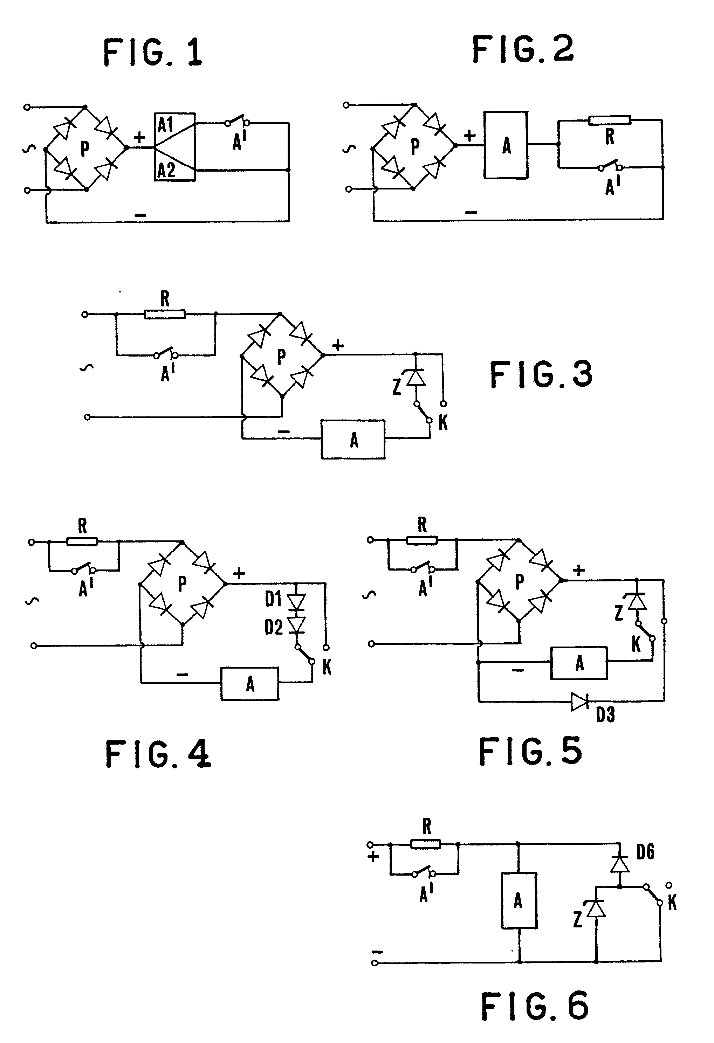

On sait que l'énergie nécessaire pour retenir un contacteur électromagnétique dans la condition fermée est beaucoup moins importante que celle nécessaire pour activer le passage du même contacteur de la condition ouverte à la condition fermée, et c'est pour cette raison que dans l'alimentation des contacteurs électromagnétiques on fait usage d'économiseurs permettant de réduire le courant d'alimentation de l'enroulement du contacteur pendant les périodes de retenue par rapport au courant absorbé pendant les périodes d'activation. Ces économiseurs connus, dont le circuit fondamental est illustré dans les figures 1 et 2 du dessin annexé, peuvent faire usage d'un double enroulement du contacteur, ou bien d'une résistance supplémentaire.

Lors que l'on emploie un double enroulement (figure 1), le contacteur A est pourvu de deux enroulements d'excitation A1 et A2, le premier de ceux-ci étant d'une puissance plus grande et le second d'une puissance plus réduite, et le premier enroulement A1 est alimenté par l'intermédiaire d'un contact auxiliaire A' du contacteur, qui s'ouvre vers la fin de la course de fermeture du contacteur. L'ensemble, si le réseau d'alimentation est un réseau de courant alternatif, est alimenté à travers un pont redresseur P qui, par contre, manque si le réseau d'alimentation est un réseau de courant continu. De cette façon, au moment de l'activation du contacteur les deux enroulements A1 et A2 sont insérés et ils débitent la puissance d'actionnement nécessaire pour faire passer le contacteur de la condition ouverte à la condition fermée, tandis que, quand le contacteur est sur le point d'atteindre la position fermée, le contact auxiliaire A' coupe l'alimentation de l'enroulement A1, en laissant en fonction, pour la retenue, seulement l'enroulemet A2, avec une réduction considérable de la consommation d'énergie et du rechauffement du contacteur.

Dans le cas où l'on emploie une résistance supplémentaire (figure 2), le contacteur A est pourvu d'un enroulement d'excitation seulement et, en dérivation au contact auxiliaire A', est disposée une résistance R, calculée de sorte à réduire le courant traversant l'enroulement A de la valeur d'activation à la valeur de retenue.

Dans les deux circuits d'alimentation connus on rencontre l'inconvénient d'un fonctionnement non net dans certains champs de la tension d'alimentation. Il serait souhaitable que le contacteur resterait insensible à l'excitation jusqu'à une certaine valeur critique, et qu'au dessus de cette valeur critique il se fermerait avec sécurité et sans rebonds du noyau et, par conséquent, de l'équipage mobile. Au contraire, en pratique on vérifie des champs de tension dans lesquels la fermeture n'a pas lieu d'une façon nette si l'on ne prend pas des mesures particulières. Dans ce but on peut accepter una plus grande usure des pôles magnétiques, en retardant l'action des ressorts des contacts ou en réduisant la pression de ces ressorts, ou bien l'on utilise un enroulement de retenue A2 de puissance plus grande ou une résistance d'économie R de valeur inférieure par rapport aux valeurs autrement nécessaires, avec des inconvénients évidents et avec une mauvaise utilisation du matériel des contacts, à cause du recul réduit des ressorts. D'une façon plus rationnelle, on peut insérer la résistance d'économie R seulement après la fermeture complète du contacteur, mais cela est coûteux à cause de la nécessité d'employer un dispositif auxiliaire, tel qu'un relais retardé, commandé par le contact auxiliaire A', lequel dans ce cas doit être ouvert lors que le contacteur se trouve dans sa condition désexcitée. Ce dispositif est coûteux parce qu'il doit présenter un pouvoir de coupe relativement élevé, étant donné que quand le circuit magnétique du contacteur est complètement fermé l'inductance de l'enroulement d'excitation devient très élevée.

De plus, les circuits d'alimentation connus obligent rigidement le fonctionnement du contacteur en ce qui a trait au temps de relâchement, qui est défini par les paramètres du contacteur et du circuit et ne peut pas être modifié par l'usager. Mais dans les appareillages dans lesquels un contacteur est commandé au moyen de poussoirs, avec ou sans circuit d'autoalimentation (comme, par exemple, dans le cas d'élévateurs, grues roulantes, fins de course, etc.), le relâchement doit être rapide, tandis que dans les cas où le contacteur est commandé par l'intermédiaire d'un interrupteur de marche ayant en série un contact actionné par un automatisme (comme, par exemple, dans le cas de pressostates, régulateurs de niveau, de température, de débit, etc.) il est nécessaire, à cause des fréquentes imperfections de fonctionnement des automatismes à proximité du point de réglage, que le contacteur relâche avec un certain retard, afin d'éviter un fonctionnement non net du contacteur, avec des conséquences souvent très graves, dans les conditions dans lesquelles les automatismes donnent lieu à plusieurs fermetures et ouvertures rapprochées. Il y a aussi des cas dans lesquels on vérifie des brèves manques de tension imprévues, auxquelles ne doit pas correspondre un relâchement partiel ou total du contacteur, qui doit donc présenter un certain retard au relâchement. L'impossibilité d'adapter le temps de relâchement d'un contacteur aux exigences d'installation comporte donc la nécessité de fabriquer et d'emmagasiner des séries différentes de contacteurs ayant un relâchement rapide ou respectivement lent, et pour le reste identiques entre eux, et de choisir opportunément le type de contacteur en prévision de son application.

Suivant le document EP-A-0.006.843 est connu un circuit d'alimentation pour une soupape électromagnétique, comprenant un composant d'économie inséré dans la condition fermée du contacteur, un circuit de recirculation incluant un premier semi-conducteur inséré de façon permanente en parallèle à l'enroulement d'excitation du contacteur, dans un sens (considéré dans le cadre du circuit de recirculation) conforme au sens de passage du courant d'alimentation dans l'enroulement, de sorte qu'il ralentit l'ouverture de la soupape, et un second semi-conducteur constitué par une diode zener, ayant le but de limiter ce ralentissement de l'ouverture. Ce second semi-conducteur peut être omis dans certains cas. La présence ou non du second semi-conducteur dans le projet du circuit modifie le retard à l'ouverture de la soupape, mais ce retard ne peut pas être modifié lors de l'installation de l'appareil.

Par les documents GB-A-877,036 et GB-A-344,001 il est connu d'utiliser comme composant d'économie une impédance dans le but de diminuer les pertes dans le circuit.

L'invention a pour but de réaliser un circuit d'alimentation avec économiseur, pour des contacteurs électromagnétiques, qui par des moyens économiques et simples assure le mieux possible un fonctionnement net du contacteur, avec le maximum d'économie dans l'énergie et dans l'usure des parties, et qui en plus permette d'adapter le contacteur, au moment même de son installation, aux exigences de relâchement rapide ou lent qui se posent, en évitant ainsi la nécessité d'une différentiation et d'une sélection préalable des contacteurs à relâchement rapide et lent.

Ce but est atteint, suivant l'invention, au moyen d'un circuit d'alimentation pour un contacteur électromagnétique, comprenant un composant d'économie inséré, dans la condition fermée du contacteur, par un contact auxiliaire du contacteur, un circuit de recirculation incluant un premier système semi-conducteur inséré de façon permanente en parallèle à l'enroulement d'excitation du contacteur, sans intervention d'éléments fortement dissipatifs et (considéré dans le cadre du circuit de recirculation) dans un sens conforme au sens de passage du courant d'alimentation dans l'enroulement, et au moins un second semi-conducteur dont le seuil de tension de conduction est une fraction de la tension d'alimentation de l'enroulement du contacteur, caractérisé en ce qu'il comprend un moyen de commutation disposé pour permettre d'insérer ou non ledit second semi-conducteur en série audit premier semi-conducteur.

Grâce à ces caractéristiques, la première partie de la course de fermeture du contacteur a lieu d'une façon habituelle, avec l'enroulement d'excitation traversé par un courant relativement fort autorisé par le fait que la résistance d'économie est court-circuitée par le contact auxiliaire du contacteur, et pendant cette phase une énergie de champ considérable se sera accumulée dans l'enroulement du contacteur. Mais, au moment où le contact auxiliaire s'ouvre, ainsi insérant la résistance d'économie dans le circuit d'alimentation de l'enroulement d'excitation du contacteur et réduisant le courant d'alimentation, le surplus de courant circulant dans ce dernier est autorisé à continuer à circuler en traversant ledit premier semi-conducteur, qui est disposé dans le sens approprié pour permettre cette circulation. Ce phénomène de recirculation n'a lieu qu'avec un effet négligeable dans les circuits connus, parce que dans ceux-ci le courant de recirculation est obligé à traverser la résistance d'économie, laquelle dissipe en un temps très court l'énergie disponible. Par contre, dans le circuit selon l'invention, aucun élément fortement dissipatif n'est inséré dans ce circuit de recirculation, et par conséquant le courant dans l'enroulement d'excitation du contacteur décroit avec une certaine lenteur et assure un complètement parfait de la course de fermeture. Ce phénomène a lieu d'une façon substantiellement équivalente indépendamment du fait que le second semi-conducteur soit inséré ou non en série au premier; il assure une fermeture nette du contacteur, et il est obtenu par des moyens simples et économiques, sans qu'il soit nécessaire de réduire la charge des ressorts des contacts, ou d'en retarder l'action, ou d'augmenter la consommation d'énergie, ce qui introduirait des causes de plus forte usure des noyaux et de mauvais emploi des plaques de contact.

Lorsqu'ensuite, en son temps, l'alimentation à l'enroulement d'excitation du contacteur est coupée pour actionner l'ouverture, si le second semi-conducteur n'est pas inséré en serie au premier semi-conducteur par le moyen de commutation, il se vérifie encore une recirculation similaire de courant à travers le premier système semi-conducteur, avec peu de dissipation, et par conséquent on obtient un retard considérable du relâchement, parce que la recirculation se prolonge jusqu'à la dissipation naturelle de l'énergie de champ de l'enroulement. Si, au contraire, le moyen de commutation est disposé de sorte à insérer le second semi-conducteur en série au premier, la recirculation est coupée par le second semi-conducteur dès que la tension à ses bouts devient inférieure à son seuil de tension de conduction. En choisissant d'une façon appropriée ce seuil on peut donc obtenir que le relâchement du contacteur soit rapide d'une manière adéquate. En outre il est suffisant de disposer le moyen de commutation, au moment de l'installation, dans une position telle que le second semi-conducteur soit inséré ou non en série au premier, pour obtenir que le contacteur présente des caractéristiques de relâchement rapide ou lent, en l'adaptant ainsi aux exigences de l' installation.

Ces caractéristiques et d'autres et les avantages de l'objet de l'invention ressortiront plus clairement de la suivante description de certains exemples de réalisation, représentés schématiquement dans les dessins annexés, dans lesquels:

Figs. 1 et 2 montrent les schémas connus d'alimentation de l'enroulement d'excitation d'un contacteur avec des moyens économiseurs;

Fig. 3 illustre le schéma du circuit d'alimentation suivant l'invention, dans le cas d'une alimentation par courant alternatif;

Figs. 4 et 5 montrent des modifications au schéma du circuit selon la figure 3; et

Figs. 6 montre un circuit pour l'alimentation de l'enroulement par courant continu.

Les schémas connus illustrés dans les figures 1 et 2 ont été déjà commentés dans le préambule. Comme il résulte de la figure 3, le schéma connu représenté dans la figure 2 est modifié, suivant la présente invention, en ce que la résistance d'économie R, qui peut être court-circuitée par le contact auxiliaire A' du contacteur, est disposée en amont du pont redresseur P, au lieu qu'entre le pont P et l'enroulement A d'excitation du contacteur, et en ce qu'une diode zener Z peut être insérée, ou non, en série à l'enroulement A, par un moyen de commutation K. Dans ce cas, ledit au moins un premier semi-conducteur inséré de façon permanente en parallèle à l'enroulement d'excitation du contacteur, sans intervention d'éléments fortement dissipatifs et (considéré dans le cadre du circuit de recirculation) dans un sens conforme au sens de passage du courant d'alimentation dans l'enroulement, est constitué par l'ensemble des diodes dudit pont redresseur P. On remarque, en effet, que les deux branches de ce pont qui sont disposées en parallèle à l'enroulement A permettent la recirculation libre du surplus de courant circulant dans l'enroulement lors que l'insertion de la résistance R limite la valeur du courant débité par le réseau. Par contre, un phénomène similaire est substantiellement empêché, dans le schéma connu représenté dans la figure 2, par la présence de la résistance R qui, dans les conditions considérées, s'oppose à la recirculation du courant de l'enroulement A à travers les diodes du pont P. Pour cette raison le circuit selon la figure 3 favorise fortement la fermeture nette du contacteur, à travers les phénomènes et avec les avantages indiqués ci-dessus.

Si, dans le circuit selon la figure 3, le moyen de commutation K est disposé de sorte à exclure la diode zener Z (c'est à dire qu'il se trouve dans la position opposée à celle représentée), au moment de l'interruption de l'alimentation le courant de l'enroulement A continue a recirculer à travers le pont de diodes P jusqu'à son épuisement naturel à cause des phénomènes dissipatifs, et par conséquent pour un temps de l'ordre de 0,5 à 1 seconde, en rendant lent le relâchement du contacteur. Si, au contraire, le moyen de commutation K est disposé de la manière illustrée, et par conséquent la diode zener Z (qui dans ce cas forme le semi-conducteur dont le seuil de tension de conduction est une fraction de la tension d'alimentation de l'enroulement du contacteur) est insérée en série entre le pont redresseur P et l'enroulement A, cette diode zener coupe la recirculation de courant dès que la tension à ses bouts devient inférieure à son seuil de tension de conduction (dans ce cas, sa tension inverse maximale). Un choix approprié des caractéristiques de la diode zener Z (avec une tension inverse maximale de l'ordre du 5 % de la tension d'alimentation) permet de rendre rapide d'une manière appropriée (par exemple dans l'ordre de 150 a 200 ms) le relâchement du contacteur. De ce fait, la manoeuvre judicieuse du moyen de commutation K permet d'adapter aux exigences de chaque installation les caractéristiques de relâchement du contacteur alimenté par le circuit selon l'invention.

Le seuil de tension de conduction du second semi-conducteur ne doit pas être excessivement élevé pour ne pas faire obstacle à la fermeture nette du contacteur. Puisque dans le commerce on ne trouve pas des diodes zener avec des tensions inverses maximales inférieures à une certaine limite, le schéma selon la figure 3 pourrait ne pas resulter adéquat pour l'alimentation de contacteurs à des tensions particulièrement réduites. Dans ce cas, comme représenté dans la figure 4, la diode zener Z peut être remplacée par deux ou plusieurs diodes D1, D2, ..., disposées en série entr'elles et avec un sens opposé à celui de la diode zener Z qu'elles remplacent. Dans ce cas, pour interrompre la recirculation on fait usage du seuil de tension de conduction directe, au lieu que de la tension inverse maximale.

D'autre part, dans certains cas le seuil de conduction directe du pont redresseur P (et par conséquent sa chute interne de tension) peut résulter trop élevé pour un fonctionnement avec relâchement lent. Dans ce cas, une diode D3 à basse chute interne de tension peut être insérée en parallèle au pont redresseur P, comme illustré dans la figure 5. Cette diode peut être aussi remplacée par un pont de diodes à basse chute interne de tension. Les dispositions selon les figures 3, 4 et 5 peuvent être aussi combinées entr'elles de différentes façons.

Dans ce qui a été exposé jusqu'ici, on a supposé que l'enroulement A d'excitation du contacteur devait être alimenté à partir d'un réseau à courant alternatif, à travers un pont redresseur P, utilisable lui-même comme un premier semi-conducteur aux fins de l'invention. Par contre, dans les cas où l'alimentation est effectuée à partir d'un réseau à courant continu, le pont P peut être omis, et alors l'on peut utiliser la disposition selon la figure 6.

Selon la figure 6, en dérivation à l'enroulement A d'excitation du contacteur est insérée une diode D6, en série à laquelle peut être insérée ou non, par l'intermédiaire d'un moyen de commutation K, une diode zener Z, ainsi donnant lieu à un temps de relâchement long lors que la diode zener Z est excludée, ou bien à un temps de relâchement court lors que la diode zener Z est insérée. Les phénoménes qui ont lieu sont égaux à ceux décrits ci-avant, avec la seule différence que la recirculation a lieu à travers la diode D6, au lieu qu'à travers le pont de diodes P.

Lors que l'alimentation est par courant continu, selon la figure 6, comme on peut le remarquer, l'enroulement A n'est jamais alimenté dans la phase d'activation à travers une diode ou une diode Zener; de ce fait, l'activation du contacteur est obtenue, dans ce cas, par une tension d'alimentation plus réduite, de façon correspondante, que dans le cas d'alimentation par courant alternatif.

Naturellement, aussi dans les cas de la figure 6 l'on peut appliquer les modifications illustrées dans les figures 4 et 5. En outre, les schémas utilisés pour l'alimentation par courant continu peuvent être appliqués, dans le cas d'alimentation par courant alternatif, en les insérant en aval d'un pont redresseur qui cependant, dans ce cas, ne participerait pas (sinon en une mesure négligeable) au comportement caractéristique selon l'invention. Réciproquement, rien n'empêche l'utilisation d'un pont redresseur aussi dans le cas d'alimentation par courant continu, ce qui peut se révéler utile, par exemple, pour des raisons d'unification constructive.

Le moyen de commutation K peut être réalisé de différentes façons. Selon une première possibilité il peut être constitué par un dispositif mécanique d'interruption ou de déviation, c'est à dire par un véritable commutateur ou interrupteur, monté sur le contacteur et pouvant être actionné, au moment de l'installation, pour être porté dans l'une ou l'autre de ses positions, selon les exigences de relâchement lent ou rapide qui se présentent. Selon une autre possibilité, le moyen de commutation peut être formé par une plaque à bornes ou similaire, ou par un système de connecteurs (du type faston ou similaires) tels à permettre les différentes connexions des composants, soit moyennant l'application et le détachement de ces derniers, soit moyennant l'application ou détachement de pontets ou d'autres moyens de connexion. Enfin, ledit moyen de commutation peut être aussi constitué par un composant accessoire destiné à être appliqué au circuit du contacteur ou bien à être omis, selon la nécessité, cet accessoire pouvant contenir des connexions appropriées pour des semi-conducteurs installés d'une manière permanente dans le contacteur, ou bien pouvant contenir lui-même l'un ou plusieurs de ces semi-conducteurs.

Un avantage ultérieur des circuits selon les figures 3 à 5, quand ils sont utilisés avec du courant alternatif, consiste en ce que, l'impédence d'économie R se trouvant dans la partie du circuit située en amont du pont redresseur, la résistance d'économie habituelle peut être remplacée par une impédence ayant un caractère principalement inductif, en réduisant ainsi la consommation de puissance active et le rechauffement.

Le circuit selon l'invention est généralement approprié pour n'importe quel type de contacteur électromécanique. Cependant, des avantages particuliers sont obtenus dans l'application de ce circuit à l'alimentation d'un contacteur substantiellement selon le brevet IT-A-911.966 de la même titulaire, dans lequel, par la prévision d'un entrefer dans la culasse du noyau, l'usure des pièces polaires ne modifie pas dans le temps la valeur de l'entrefer et, par conséquent, la réluctance du circuit magnétique, en maintenant donc constantes dans le temps les caractéristiques du contacteur. Cette constance particulière de caractéristiques du contacteur autorise la meilleure exploitation des caractéristiques avantageuses du circuit d'alimentation selon la présente invention.

## Revendications

1. Circuit d'alimentation pour un contacteur électromagnétique (A), comprenant un composant d'économie (R) qui dans la condition fermée du contacteur est inséré par un contact auxiliaire (A') du contacteur, un circuit de recirculation incluant un premier système semi-conducteur (P; D6) inséré de façon permanente en parallèle à l'enroulement d'excitation (A) du contacteur, sans intervention d'éléments fortement dissipatifs et (considéré dans le cadre du circuit de recirculation) dans un sens conforme au sens de passage du courant d'alimentation dans l'enroulement (A), et au moins un second semi-conducteur (Z; D1 et D2), dont le seuil de tension de conduction est une fraction de la tension d'alimentation de l'enroulement (A) du contacteur, **caractérisé en ce** qu'il comprend un moyen de commutation (K) disposé pour permettre d'insérer ou non ledit second semi-conducteur (Z; D1 et D2) en série audit premier semi-conducteur (P; D6).

2. Circuit d'alimentation selon la revendication 1, caractérisé en ce que ledit premier système semi-conducteur est constitué par l'ensemble de diodes d'un pont redresseur (P).

3. Circuit d'alimentation selon la revendication 2, caractérisé en ce que, dans le cas d'alimentation à partir d'un réseau à courant alternatif, ledit ensemble de diodes formant ledit premier système semi-conducteur (P) est un pont redresseur destiné à redresser le courant alternatif du réseau.

4. Circuit d'alimentation selon la revendication 3, caractérisé en ce qu'au moins une diode (D3) ou pont de diodes à basse chute interne de tension est inséré en dérivation audit pont redresseur (P).

5. Circuit d'alimentation selon la revendication 1, caractérisé en ce que ledit au moins un second semi-conducteur comprend une diode zener (Z), dont on utilise la tension inverse maximale.

6. Circuit d'alimentation selon la revendication 1, caractérisé en ce que ledit au moins un second semi-conducteur comprend une ou plusieurs diodes (D1, D2) dont on utilise la tension de seuil de conduction directe.

7. Circuit d'alimentation selon la revendication 1, caractérisé en ce que lesdits moyens de commutation (K) sont constitués par un dispositif mécanique d'interruption ou de déviation.

8. Circuit d'alimentation selon la revendication 1, caractérisé en ce que lesdits moyens de commutation (K) sont constitués par une plaque à bornes, telle à permettre les différentes connexions des composants.

9. Circuit d'alimentation selon la revendication 1, caractérisé en ce que lesdits moyens de commutation (K) sont constitués par un système de connecteurs, du type faston, tel à permettre les différentes connexions des composants.

10. Circuit d'alimentation selon la revendication 1, caractérisé en ce que lesdits moyens de commutation (K) sont constitués par un accessoire destiné à être appliqué au circuit du contacteur ou bien à être omis.

11. Circuit d'alimentation selon la revendication 1, caractérisé en ce que ledit composant d'économie (R) présente une impédance ayant un caractère principalement inductif.

**Claims**

1. Feed circuit for an electromagnetic contactor (A), comprising: an economy member (R) which, in the closed condition of the contactor, is inserted by an auxiliary contact (A') of the contactor; a recirculation circuit including a first semiconductor system (P; D6) permanently connected in parallel to the excitation winding (A) of the contactor, without the intervention of any highly dissipative component and (as seen within the recirculation circuit) in the same sense in which the feed current flows in winding (A); and at least one second semiconductor (Z; D1 and D2), whose conductivity threshold voltage is equal to a fraction of the feed voltage of contactor winding (A); characterized in that it comprises a commutation means (K) so arranged that it allows inserting or not inserting said second semiconductor (Z; D1 and D2) in series with said first semiconductor (P; D6).

2. Feed circuit as set forth in Claim 1, characterized in that said first semiconductor system is formed by the system of diodes of a bridge rectifier.

3. Feed circuit as set forth in Claim 2, characterized in that, in the case the feed being obtained from an alternating current network, said system of diodes forming the first semiconductor system (P) is a bridge rectifier intended to rectify the alternating current of the network.

4. Feed circuit as set forth in Claim 3, characterized in that at least one diode (D3) or a diode bridge having a low inner voltage drop is inserted in parallel with said bridge rectifier (P).

5. Feed circuit as set forth in Claim 1, characterized in that said at least one second semiconductor comprises a zener diode (Z), of which the maximum inverse voltage is used.

6. Feed circuit as set forth in Claim 1, characterized in that said at least one second semiconductor comprises one or several diodes (D1, D2) of which the threshold voltage for direct conduction is used.

7. Feed circuit as set forth in Claim 1, characterized in that said commutation means (K) are formed by a mechanical interrupting or switching device.

8. Feed circuit as set forth in Claim 1, characterized in that said commutation means (K) are formed by a contact plate suitable for allowing the various connections of the component parts.

9. Feed circuit as set forth in Claim 1, characterized in that said commutation means (K) are formed by a system of Faston-type connectors suitable for allowing the various connections of the component parts.

10. Feed circuit as set forth in Claim 1, characterized in that said commutation means (K) are formed by a fitting intended to be applied to the contactor circuit or to be omitted.

11. Feed circuit as set forth in Claim 1, characterized in that said economy member (R) has an impedance whose character is mainly inductive.

## Patentansprüche

1. Speiseschaltung für einen elektromagnetischen Kontaktgeber (A) mit: einem Sparteil (R), der bei geschlossenem Kontaktgeber durch einen Hilfskontakt (A') des Kontaktgebers eingeschaltet wird; einem Rezirkulationstromkreis, der ein erstes Halbleitersystem (P; D6) aufweist, das mit der Erregerwicklung (A) des Kontaktgebers dauerhaft parallelgeschaltet ist, und zwar ohne Eingriff von stark ableitenden Elementen und (im Bereich des Rezirkulationstromkreis gesehen) im gleichen Sinn verlaufend, in dem der Speisestrom durch die Wicklung (A) fliesst; und wenigstens einem zweiten Halbleiter (Z; D1 und D2), dessen Durchlass-Spannungsschwelle einem Bruchteil der Speisespannung der Wicklung (A) des Kontaktgebers entspricht; **dadurch gekennzeichnet,** dass sie ein Schaltmittel (K) aufweist, das so angeordnet ist, dass es die Reihenschaltung des zweiten Halbleiters (Z; D1 und D2) mit dem ersten Halbleiter (P; D6) entweder zulässt oder nicht zulässt.

2. Speiseschaltung nach Anspruch 1, dadurch gekennzeichnet, dass das erste Halbleitersystem aus der Diodengruppe eines Brückengleichrichters (P) besteht.

3. Speiseschaltung nach Anspruch 2, dadurch gekennzeichnet, dass im Fall einer von einem Wechselstromnetz ausgehenden Speisung die das erste Halbleitersystem (P) bildende Diodengruppe ein Brückengleichrichter ist, der dazu bestimmt ist, den Netzwechselstrom gleichzurichten.

4. Speiseschaltung nach Anspruch 3, dadurch gekennzeichnet, dass zum Brückengleichrichter (P) wenigstens eine Diode (D3) oder eine Diodenbrücke mit niedrigem Innenspannungsabfall in Nebenschluss geschaltet ist.

5. Speiseschaltung nach Anspruch 1, dadurch gekennzeichnet, dass der wenigstens eine zweite Halbleiter eine Zenerdiode (Z) umfasst, von der die höchste Sperrspannung zur Anwendung kommt.

6. Speiseschaltung nach Anspruch 1, dadurch gekennzeichnet, dass der wenigstens eine zweite Halbleiter eine oder mehrere Dioden (D1,D2) umfasst, von denen die direkte Durchlass-Schwellenspannung zur Anwendung kommt.

7. Speiseschaltung nach Anspruch 1, dadurch gekennzeichnet, dass die Schaltmittel (K) aus einer mechanischen Abschalt- oder Ablenkvorrichtung bestehen.

8. Speiseschaltung nach Anspruch 1, dadurch gekennzeichnet, dass die Schaltmittel (K) aus einer Platte mit Kontakten bestehen, die den Anschluss der verschiedenen Bauteile ermöglichen.

9. Speiseschaltung nach Anspruch 1, dadurch gekennzeichnet, dass die Schaltmittel (K) aus einem System mit Verbindern der "Faston"-Bauart bestehen, die die Anschlüsse der verschiedenen Bauteile ermöglichen.

10. Speiseschaltung nach Anspruch 1, dadurch gekennzeichnet, dass die Schaltmittel (K) aus einem Nebengerät bestehen, das dazu bestimmt ist, am Kontaktgeberkreis angebracht oder weggelassen zu werden.

11. Speiseschaltung nach Anspruch 1, dadurch gekennzeichnet, dass der Sparteil (R) eine vor-

wiegend induktivartige Impedanz aufweist.

FIG. 1

FIG. 2

FIG. 3

FIG. 4

FIG. 5

FIG. 6